# EUROPÄISCHE PATENTSCHRIFT

(11) **EP 2 314 174 B1**
(45) Veröffentlichungstag und Bekanntmachung des Hinweises auf die Patenterteilung: **20.06.2012**
(21) Anmeldenummer: 10450161.4
(22) Anmeldetag: 22.10.2010
(51) Int. Cl.: A23N 1/00, A47J 19/02

(54) **Fruchtpresse**
Fruit press
Presse-fruits

(30) Priorität: 23.10.2009 AT 16752009
(43) Veröffentlichungstag der Anmeldung: 27.04.2011
(73) Patentinhaber: Technic-Marketing Products GmbH, 4040 Linz (AT)
(72) Erfinder: Josef Pichler, 4211 Alberndorf (AT)
(74) Vertreter: Hübscher, Helmut

(56) Entgegenhaltungen:
- WO-A1-2004/052126
- WO-A2-2007/043091
- AT-A4- 507 768
- ES-A1- 2 189 556
- US-A- 2 270 007
- US-A- 5 170 699

## Beschreibung

Die Erfindung bezieht sich auf eine Fruchtpresse mit einem Gestell, in dem parallele Wellen einerseits für zwei beidseits eines Messers angeordnete, gegensinnig antreibbare Presswalzen mit über den Umfang verteilten, halbkugelförmigen Pressausnehmungen und anderseits für zwei unterhalb der Presswalzen vorgesehene, gegensinnig zu den Presswalzen antreibbare Stempelköpfe gelagert sind, die über den Umfang verteilte, mit den Pressausnehmungen der Presswalzen zusammenwirkende, kugelförmige Pressstempel tragen, und mit einer lösbaren Abziehsicherung für die axial auf ihren konischen Wellen aufgeschobenen Presswalzen und Stempelköpfe.

Zum Auspressen von Früchten, insbesondere Orangen, ist es bekannt (WO 2004/052126 A1), die Früchte in den Zwickelbereich zwischen zwei nebeneinanderliegenden Presswalzen zu fördern, wo sie in halbkugelförmigen Pressausnehmungen aufgenommen und mit Hilfe eines von unten zwischen die Presswalzen hochgehobenen Messers halbiert werden, bevor die Fruchthälften in den Pressausnehmungen durch Pressstempel ausgepresst werden, die auf unterhalb der Presswalzen gelagerten, synchron mit dem Presswalzen angetriebenen Stempelköpfen angeordnet sind. Diese Presswerkzeuge sind auf parallelen, konischen Mehrkantwellen lösbar aufgeschoben und werden jeweils auf ihren zugehörigen, in einem gemeinsamen Gestell gelagerten Wellen durch axiale Sicherungsschrauben gehalten. Da alle mit den Früchten bzw. dem Fruchtsaft in Berührung kommenden Teile einer solchen Fruchtpresse wiederholt gereinigt werden müssen, bedeutet dies, dass zum Reinigen sowohl die Presswalzen als auch die Stempelköpfe nach einem Lösen der jeweiligen Sicherungsschrauben von ihren Wellen abgezogen und nach ihrer Reinigung wieder auf die Wellen aufgeschoben und axial gesichert werden müssen, was mit einem erheblichen Arbeitsaufwand verbunden ist. Außerdem besteht eine Beschädigungsgefahr für den Fall, dass eines dieser Presswerkzeuge nicht ordnungsgemäß axial fixiert worden sein sollte.

Zur Festlegung der Presswalze und eines dieser Presswalze zugeordneten Stempelkopfs auf den beiden parallelen Wellen einerseits für die Presswalze und anderseits für den Stempelkopf ist es bei Fruchtpressen außerdem bekannt (ES 2 189 556 A1), die beiden Wellen am freien Ende stirnseitig mit einer Lasche zu verbinden, die eine Abziehsicherung für die Presswalze und dem Stempelkopf bildet. Zum Abziehen der Presswalze und des Stempelkopfes von den zugehörigen Wellen sind die jeder Welle zugehörigen Befestigungsschrauben für die Lasche zu lösen, sodass sich hinsichtlich des Arbeitsaufwands keine Erleichterung im Vergleich zu einer für jede Welle gesonderten axialen Festlegung der Presswalze und des Stempelkopfes ergibt. Es wird vielmehr eine Gleitreibung zwischen der Presswalze bzw. dem Stempelkopf und der Lasche während des Pressenbetriebs in Kauf genommen.

Der Erfindung liegt somit die Aufgabe zugrunde, eine Fruchtpresse der eingangs geschilderten Art so auszugestalten, dass das Abnehmen und die neuerliche Befestigung der Presswerkzeuge erheblich vereinfacht wird, ohne die Funktionssicherheit der Fruchtpresse zu gefährden.

Die Erfindung löst die gestellte Aufgabe dadurch, dass die Abziehsicherung in einem gemeinsamen Träger drehbar gehaltene, axiale Anschläge für die Presswalzen und Stempelköpfe umfasst und dass der Träger mit dem Gestell in Richtung der Wellen lösbar verbunden ist.

Zufolge dieser Maßnahmen bedarf es zum Abziehen der Presswerkzeuge von ihren Wellen nur der Abnahme des Trägers, weil die axiale Sicherung der Presswalzen und der Stempelköpfe auf ihren Wellen durch die im gemeinsamen Träger gehaltenen Anschläge erfolgt. Zum Ausgleich der Drehbewegung der Presswerkzeuge sind die axialen Anschläge für die Presswalzen und Stempelköpfe im Träger drehbar gehalten. Zum Reinigen der Presswalzen und Stempelköpfe braucht daher lediglich der Träger vom Gestell gelöst und mit den axialen Anschlägen von den Wellen entfernt zu werden, um die einzelnen Presswalzen und Stempelköpfe jeweils für sich von ihren Wellen abziehen zu können. Die Montage der gereinigten Presswerkzeuge erfolgt in umgekehrter Reihenfolge, indem zunächst die Presswalzen und Stempelköpfe auf die zugehörigen konischen Wellen axial aufgesteckt werden, bevor die aufgesteckten Presswalzen und Stempelköpfe durch ein Verbinden des Trägers mit dem Gestell in Richtung der Wellen über die axialen Anschläge in ihrer Arbeitslage gesichert werden.

Um unter einem Ausgleich von Fertigungstoleranzen eine spielfreie Festlegung der Presswalzen und Stempelköpfen auf ihren konischen Wellen sicherstellen zu können, können die Presswalzen und Stempelköpfe durch die Anschläge in axialer Richtung federnd beaufschlagt werden, was aufgrund der konischen Wellen bei einer axialen Verschiebung der Presswalzen bzw. Stempelköpfe den Ausgleich radialer Spiele zur Folge hat. Die federnde Beaufschlagung der Presswalzen und Stempelköpfe in axialer Richtung kann durch eine entsprechende Federbeaufschlagung der Anschläge erreicht werden. Besonders einfache Konstruktionsverhältnisse ergeben sich allerdings, wenn die Anschläge für die Presswalzen und Stempelköpfe als gummielastische Druckübertragungskörper ausgebildet werden, die unter einer elastischen Vorspannung an die Presswalzen und Stempelköpfe angestellt werden und aufgrund ihrer axialen Vorspannung die Druckbelastung der Presswalzen und Stempelköpfe bewirken.

Damit Fluchtfehler ausgeglichen und vorteilhafte Belastungsverhältnisse sichergestellt werden können, können die Anschläge über Kugelgelenke im gemeinsamen Träger drehbar gelagert werden, sodass sich die Anschläge stirnseitig selbständig gegenüber den stirnseitigen Anschlagflächen der Presswalzen und Stempelköpfe ausrichten.

Die Verbindung des gemeinsamen Trägers für die Anschläge mit dem Gestell kann auf unterschiedliche Weise hergestellt werden, wenn nur gewährleistet wird, dass der Träger in Richtung der Wellen für die Presswerkzeuge angebracht bzw. abgenommen werden kann. Besonders einfache Konstruktionsverhältnisse ergeben sich allerdings dadurch, dass der Träger auf einem zu den Wellen parallelen Tragbolzen des Gestells vorzugsweise mittels einer Befestigungsmutter befestigt wird. Mit Hilfe dieser Befestigungsmutter können die stirnseitig an den Presswalzen bzw. Stempelköpfen anschlagenden Anschläge des Trägers unter einer axialen Vorspannung gehalten werden, die die Arbeitslage der Presswalzen und Stempelköpfe sichert. Der gemeinsame Träger für die Anschläge stellt außerdem eine vorteilhafte Voraussetzung für eine Überwachung der ordnungsgemäßen Arbeitsstellung der Presswalzen und Stempelköpfe dar. Zu diesem Zweck kann dem Träger ein seine ordnungsgemäße Befestigung überwachender Sensor zur Betätigung eines Sicherheitsschalters zugeordnet werden, sodass bei einem entsprechenden, eine nicht ordnungsgemäße Trägerbefestigung anzeigenden Sensorsignal eine Sicherheitsabschaltung der Fruchtpresse erfolgen kann. Mit der Lageerfassung des Trägers ergibt sich eine automatische Überwachung der allein von der Trägerlage abhängigen Lage aller Anschläge für die einzelnen Presswalzen und Stempelköpfe.

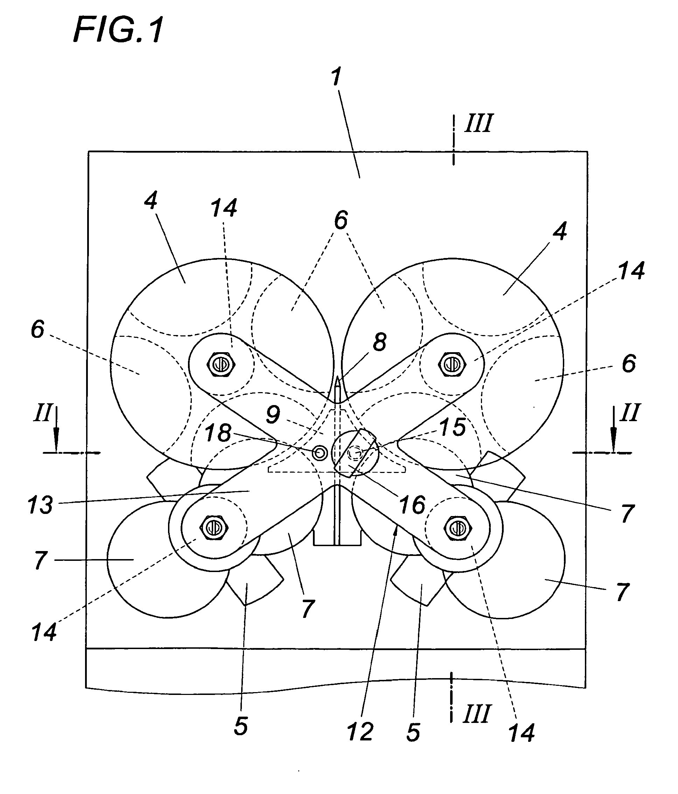

In der Zeichnung ist der Erfindungsgegenstand beispielsweise dargestellt. Es zeigen
- Fig. 1: eine Fruchtpresse nach der Erfindung in einer vereinfachten Vorderan- sicht,

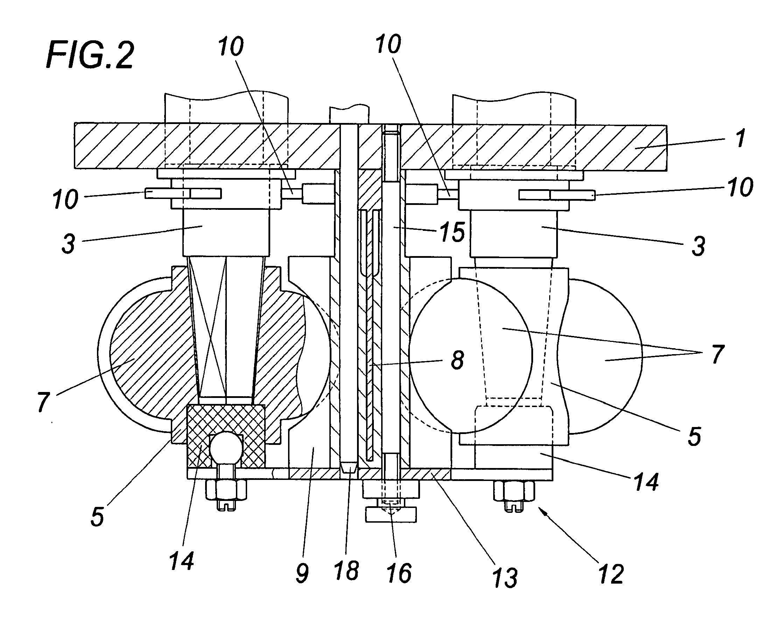

- Fig. 2: diese Fruchtpresse in einem schematischen Schnitt gemäß der Linie II-II der Fig. 1 in einem größeren Maßstab und

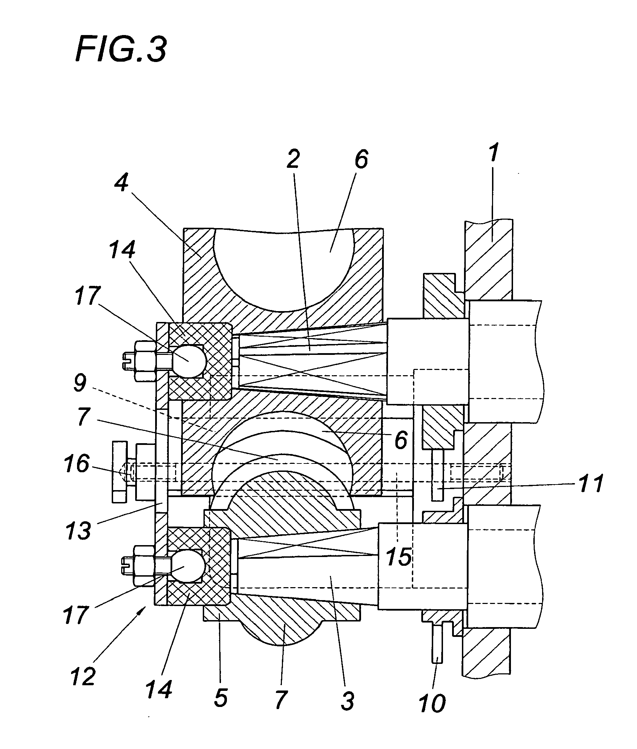

- Fig. 3: einen Schnitt nach der Linie III-III der Fig. 2.

Die dargestellte Fruchtpresse weist ein Gestell 1 auf, in dem paarweise gegensinnig antreibbare Wellen 2, 3 für Presswalzen 4 und Stempelköpfe 5 gelagert sind. Die Presswalzen 4 sind mit über ihren Umfang verteilten, halbkugelförmigen Pressausnehmungen 6 versehen, die mit kugelförmigen Pressstempeln 7 der Stempelköpfe 5 zusammenwirken. Im unteren Zwickelbereich zwischen den Presswalzen 4 ist ein Messer 8 zum Halbieren der auszupressenden Früchte vorgesehen. Dieses Messer 8 durchsetzt eine Führung 9 für die halbierten Früchte und kann mit Hilfe von Mitnehmern 10 in den Zwickelbereich zwischen den Presswalzen 4 vorgeschoben werden. Diese Mitnehmer 10 sind auf den Wellen 3 für die Stempelköpfe 5 angeordnet, sodass die Messerbewegung mit der Bewegung der Welle 3 synchronisiert ist. Damit das Messer 8 nicht in der oberen Schneidstellung hängen bleiben kann, können die Wellen 2 für die Presswalzen 4 ebenfalls mit Mitnehmern 11 versehen werden, die für eine Abwärtsbewegung des Messers 8 in die Ausgangsstellung sorgen.

Um die Presswalzen 4 und die Stempelköpfe 5 auf den als Mehrkantwellen ausgebildeten, konischen Wellen 2 und 3 lösbar zu halten, ist eine axiale Abziehsicherung 12 vorgesehen, die einen gemeinsamen Träger 13 für axiale Anschläge 14 für die Presswalzen 4 und die Stempelköpfe 5 umfasst. Diese einzeln den Presswalzen 4 und Stempelköpfen 5 zugeordneten Anschläge 14 sind im Träger 13 drehbar gelagert, sodass sie sich mit den Presswalzen 4 bzw. Stempelköpfen 5 mitdrehen können. Zur Befestigung des gemeinsamen Trägers 13 dient ein Tragbolzen 15, der den Träger 13 mit einem Gewindeansatz durchsetzt, sodass der Träger 13 mit Hilfe einer Befestigungsmutter 16 in Richtung der Wellen 2, 3 auf dem parallel zu den Wellen 2, 3 verlaufenden Tragbolzen 15 befestigt werden kann, und zwar unter einer axialen Beaufschlagung der Presswalzen 4 und der Stempelköpfe 5 durch die im Träger 13 gelagerten Anschläge 14. Aufgrund dieser konstruktiven Vorgabe ist das Abziehen der Presswalzen 4 und der Pressstempel 5 von den zugehörigen Wellen 2, 3 zu Reinigungs- und Wartungszwecken einfach vorzunehmen. Es braucht ja lediglich der Träger 13 mit den im Träger 13 gelagerten Anschlägen 14 nach dem Lösen der Befestigungsmutter 16 vom Tragbolzen 15 abgenommen zu werden, um die Presswalzen 4 und Stempelköpfe 5 von den Wellen 2, 3 axial abziehen zu können. Zur Montage der Presswalzen 4 und Stempelköpfe 5 ist in umgekehrter Reihenfolge vorzugehen, wobei aufgrund der Abflachungen der Wellen 2, 3 nicht nur die Drehmitnahme gesichert, sondern auch die ordnungsgemäße gegenseitige Drehstellung der Presswalzen 4 und Stempelköpfe 5 gewährleistet wird.

Besonders vorteilhafte Konstruktionsbedingungen ergeben sich, wenn durch das Anziehen der Befestigungsmutter 16 die Anschläge 14 unter einer federnden Vorspannung an die Presswalzen 4 bzw. Stempelköpfe 7 angedrückt und damit diese Presswerkzeuge von den Wellen 2, 3 spielfrei aufgenommen werden. Diese federnde Beaufschlagung der Presswerkzeuge kann in sehr einfacher Weise dadurch erreicht werden, dass die Anschläge 14 für die Presswalzen 4 und Stempelköpfe 5 als gummielastische Druckübertragungskörper ausgebildet werden.

Zur drehbaren Halterung der Anschläge 14 können diese über Wälzlager im Träger 13 gelagert werden. Eine solche Lagerung über Wälzlager ist jedoch nicht zwingend. Es geht ja nur darum, die Drehmitnahme der Anschläge 14 durch die Presswerkzeuge zu sichern, was vorzugsweise durch eine drehbare Abstützung der Anschläge 14 auf Kugelköpfen 17 ermöglicht werden kann, die zusätzlich den Vorteil eines Kugelgelenks mit sich bringen, das Fluchtungsfehler zwischen den Drehachsen der Anschläge 14 und den zugehörigen Wellen 2, 3 für die Presswalzen 4 und Stempelköpfe 5 ausgleicht.

Mit Hilfe des gemeinsamen Trägers 13 der Abziehsicherung 12 kann zusätzlich die ordnungsgemäße Montage der Presswerkzeuge auf den Wellen 2, 3 überwacht werden. Zu diesem Zweck ist ein dem Gestell zugeordneter Sensor 18 vorgesehen, der die axiale Lage des Trägers 13 gegenüber dem Tragbolzen 15 überwacht und einen Sicherheitsschalter auslöst, wenn aufgrund der Lage des Trägers 13 die axiale Beaufschlagung der Presswalzen 4 und Stempelköpfe 5 nicht gewährleistet ist.

## Patentansprüche

1. Fruchtpresse mit einem Gestell (1), in dem parallele Wellen (2, 3) einerseits für zwei beidseits eines Messers (8) angeordnete, gegensinnig antreibbare Presswalzen (4) mit über den Umfang verteilten, halbkugelförmigen Pressausnehmungen (6) und anderseits für zwei unterhalb der Presswalzen (4) vorgesehene, gegensinnig zu den Presswalzen (4) antreibbare Stempelköpfe (5) gelagert sind, die über den Umfang verteilte, mit den Pressausnehmungen (6) der Presswalzen (4) zusammenwirkende, kugelförmige Pressstempel (7) tragen, und mit einer lösbaren Abziehsicherung (12) für die axial auf ihren konischen Wellen (2, 3) aufgeschobenen Presswalzen (4) und Stempelköpfe (5), **dadurch gekennzeichnet, dass** die Abziehsicherung (12) in einem gemeinsamen Träger (13) drehbar gehaltene, axiale Anschläge (14) für die Presswalzen (4) und Stempelköpfe (5) umfasst und dass der Träger (13) mit dem Gestell (1) in Richtung der Wellen (2, 3) lösbar verbunden ist.

2. Fruchtpresse nach Anspruch 1, **dadurch gekennzeichnet, dass** die Presswalzen (4) und Stempelköpfe (5) durch die Anschläge (14) in axialer Richtung federnd beaufschlagt sind.

3. Fruchtpresse nach Anspruch 2, **dadurch gekennzeichnet, dass** die Anschläge (14) für die Presswalzen (4) und Stempelköpfe (5) als gummielastische Druckübertragungskörper ausgebildet sind.

4. Fruchtpresse nach einem der Ansprüche 1 bis 3, **dadurch gekennzeichnet, dass** die Anschläge (14) über Kugelgelenke im gemeinsamen Träger (13) drehbar gelagert sind.

5. Fruchtpresse nach einem der Ansprüche 1 bis 4, **dadurch gekennzeichnet, dass** der Träger (13) auf einem zu den Wellen (2, 3) parallelen Tragbolzen (15) des Gestells (1) vorzugsweise mittels einer Befestigungsmutter (16) befestigbar ist.

6. Fruchtpresse nach einem der Ansprüche 1 bis 5, **dadurch gekennzeichnet, dass** dem Träger (13) ein die ordnungsgemäße Trägerbefestigung überwachender Sensor (18) zur Betätigung eines Sicherheitsschalters zugeordnet ist.

## Claims

1. Fruit press having a frame (1) in which parallel shafts (2, 3) are mounted, on the one hand, for two pressing rollers (4), which can be driven in opposite directions, are disposed on both sides of a blade (8) and have hemi-spherical pressing recesses (6) distributed over the periphery, and, on the other hand, for two presser heads (5) which can be driven in opposite directions to the pressing rollers (4), are provided underneath the pressing rollers (4) and support spherical pressers (7) which cooperate with the pressing recesses (6) of the pressing rollers (4) and are distributed over the periphery, and having a releasable anti-pull-off means (12) for the pressing rollers (4) and presser heads (5) which are pushed axially on their conical shafts (2, 3), **characterised in that** the anti-pull-off means (12) has axial stops (14) for the pressing rollers (4) and presser heads (5), which stops are rotatably held in a common carrier (13), and that the carrier (13) is releasably connected to the frame (1) in the direction of the shafts (2, 3).

2. Fruit press as claimed in claim 1, **characterised in that** the pressing rollers (4) and presser heads (5) are acted upon in a resilient manner in the axial direction by the stops (14).

3. Fruit press as claimed in claim 2, **characterised in that** the stops (14) for the pressing rollers (4) and presser heads (5) are formed as rubber-elastic pressure-transfer bodies.

4. Fruit press as claimed in any one of claims 1 to 3, **characterised in that** the stops (14) are rotatably mounted via ball joints in the common carrier (13).

5. Fruit press as claimed in any one of claims 1 to 4, **characterised in that** the carrier (13) can be attached to a supporting bolt (15) of the frame (1) in parallel with the shafts (2, 3), preferably by means of attachment nut (16).

6. Fruit press as claimed in any one of claims 1 to 5, **characterised in that** the carrier (13) is allocated a sensor (18), monitoring the correct attachment of the carrier, for actuation of a safety switch.

## Revendications

1. Presse-fruits avec un bâti (1) dans lequel sont logés des arbres (2, 3) parallèles, d'une part, pour deux rouleaux presseurs (4) disposés des deux côtés d'une lame (8), pouvant être entraînés en sens inverse, avec des évidements de pressage (6) hémisphériques, répartis sur la circonférence, et d'autre part, pour deux têtes de plateau de compression (5) prévues en dessous des rouleaux presseurs (4), pouvant être entraînées en sens inverse des rouleaux presseurs (4) et portant des plateaux de compression (7) sphériques, répartis sur la circonférence, concourant avec les évidements de pressage (6) des rouleaux presseurs (4), et avec une sécurité anti-enlèvement (12) détachable pour les rouleaux presseurs (4) enfichés axialement sur leurs arbres (2, 3) coniques et les têtes de plateau de compression (5), **caractérisé en ce que** la sécurité anti-enlèvement (12) comprend des butées (14) axiales, maintenues de manière rotative dans un support (13) commun, pour les rouleaux presseurs (4) et les têtes de plateau de compression (5) et **en ce que** le support (13) est relié, de façon détachable, avec le bâti (1) en direction des arbres (2, 3).

2. Presse-fruits selon la revendication 1, **caractérisé en ce que** les rouleaux presseurs (4) et les têtes de plateau de compression (5) sont contraints de façon élastique par les butées (14) dans le sens axial.

3. Presse-fruits selon la revendication 2, **caractérisé en ce que** les butées (14) pour les rouleaux presseurs (4) et les têtes de plateau de compression (5) sont conçues en tant que corps de transfert de pression ayant l'élasticité du caoutchouc.

4. Presse-fruits selon l'une des revendications 1 à 3, **caractérisé en ce que** les butées (14) sont logées pouvant tourner par le biais d'articulations sphériques dans le support commun (13).

5. Presse-fruits selon l'une des revendications 1 à 4, **caractérisé en ce que** le support (13) peut être fixé sur un boulon portant (15), parallèle aux arbres (2, 3), du bâti (1), de préférence au moyen d'un boulon de fixation (16).

6. Presse-fruits selon l'une des revendications 1 à 5, **caractérisé en ce qu'**un capteur (18) surveillant la fixation correcte du support est affecté au support (13), pour actionnement d'une sécurité électrique.
